# EUROPEAN PATENT APPLICATION

(11) **EP 1 308 916 A1**
(43) Date of publication of application: **07.05.2003**
(21) Application number: 01204224.8
(22) Date of filing: 05.11.2001
(51) Int. Cl.: G08B 15/00, G07C 11/00

(54) **Method and system and data source for processing of image data**

(71) Applicant: Koninklijke KPN N.V., 9726 AE Groningen (NL)
(72) Inventor: Gelbord, Boaz Simon, 1018 VV Amsterdam (NL); Roelofsen, Gerrit, 2331 AH Leiden (NL)
(74) Representative: Prins, Adrianus Willem

(57) **Abstract**

System for processing of a data string generated by a data source (4). Monitoring means (5) inspect the data string for the presence of substrings complying with certain characteristics, while, if found, the substrings are separated by separation means (5) and processed, by processing means (6,7) separately from the remaining data string. The substrings and remaining data string may be stored at different locations (8a,8b), while the substrings and remaining data string may be formatted, by formatting means (7) in different (encrypted/not-encrypted) formats. The substrings each may be replaced, by replacement means (6), by a replacement string, like an icon (2) or a box (3), which additionally may comprise an identifier referring to the relevant store location or locations of the substring.

## Description

### BACKGROUND OF THE INVENTION

The invention relates to a method and a system and a data sourcefor processing of a data string generated by that data source, especially but not exclusive targeted to the processing of image data.

The field of the invention is video surveillance, image recognition and privacy safeguarding.

The growing societal demand for privacy is on a collision course with the increased need for digital surveillance arising from growing crime and civil disputes. There is a need to avoid or soften this collision by providing a video surveillance system where one can still see the general nature of events taking place but where the identities of the parties are hidden.

There are video surveillance systems where one only views the image in retrospect if a crime was committed. The difficulty that can arise in such systems is that one does not know whether something is amiss because one cannot see the entire image. The alternative is a full-fledged video surveillance system in which one does see the entire image. However in such a situation the privacy of the filmed individual may be unnecessarily compromised.

### SUMMARY OF THE INVENTION

The invention aims to present an improvement of the prior-art methods for processing data strings.

Firstly, it should be noted that this invention is not only applicable for image related domains like camera surveillance, but could also be used in other domains.

The method according to the invention comprises the following steps:
a. the data is inspected for the presence of one or more substrings complying with certain substring characteristics;
b. if found, said one or more substrings are processed separately from the remaining data string.

The basic idea behind the invention is to have a camera or other data source, which records data (i.e. an image) which is then altered so that the (personal) identifying characteristics in the image are removed, replaced, encrypted or processed in another way. The remaining image does not contain identifying characteristics of those filmed and thus does not compromise the privacy or security of those filmed.

Preferrably said (privacy sensitive) substrings and said remaining data string are processed in different ways, whether of not dependent on said substring characteristics.

For instance the substrings and said remaining data string are stored at mutually different locations, whether or not in mutually different formats. The substrings, for instance, may be encrypted and stored in encrypted form.

The substrings preferrably are replaced by a replacement string, which replacement string is processed further together with said remaining data string, while the replaced substring is processed or stored separately.

Preferrably the replacement string comprises a watermark string, whether or not comprising an identifier referring to the relevant store location or locations of the relevant replaced substring.

Moreover, the replacement string may comprise a random bitstring, or elements derived from the relevant replacing substring, for instance elements which together present an "substring-like" replacement string, disclosing the character of the substring (for instance a not-detailed face) without disclosing the specific (face) details.

The replacement string preferrably comprises a time stamp referring to the originating time of the relevant substring.

### EXEMPLARY EMBODIMENTS

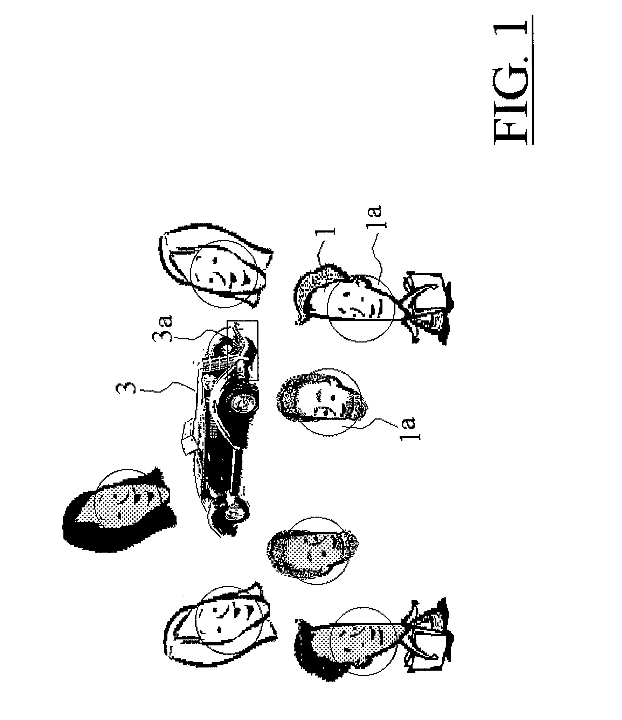

Figure 1 represents an illustration of an image, recorded by for instance a surveillance camera, comprising people, represented by human faces 1 (with identification details 1a), which image is converted by the camera into a data string, to be processed according the present inventive method.

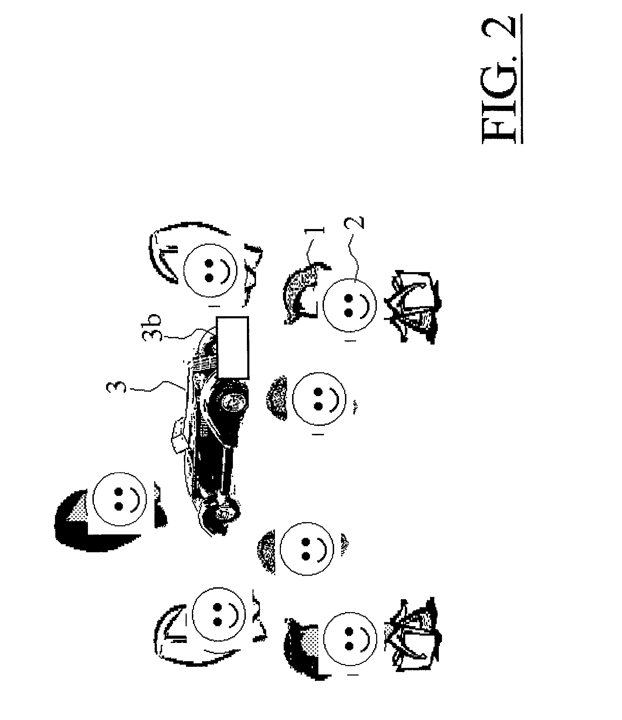

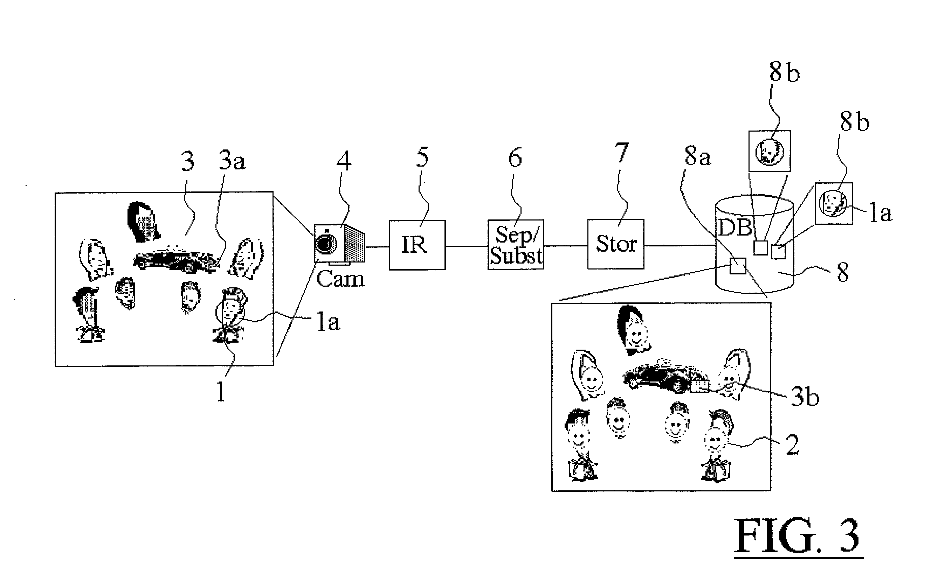

Figure 2 represents the recorded image after the image data string originated by the camera is inspected, by means of state-of-the-art image recognition techniques, for the presence of one or more substrings complying with certain substring characteristics, in this case the presence of human faces 1, while those substrings, in this case corresponding to those human faces, if found, are processed separately from the remaining data string. In this case each substring is replaced by a replacement string, represented by a (standard) face icons 2. The substrings and said remaining data string are processed in different ways as can be seen in figure 3, schematicly showing a device in which the method according to the invention can be executed.

In figure 1 also shows a car 3. The image recognition means may also be set thus that, except the characteristics of human faces 1, also the characteristics of car license plates 3a are detected and processed separately from the rest of the image. The substring representing a license plate may also be replaced by an icon or -as shown in figure 2- by an empty (white) box 3b, while the substring representing the license plate itself is processed in another way as the remaining image string.

Figure 3 shows a camera 4, already mentioned, recording "real world" images and converting them into a data string. Connected to the camera 4 is an image recognition (IR) processor 5 which is enabled to detect, in the datastring, substrings which comply with certain substring characteristics, viz. the characteristics of a human face 1 and the characteristics of a license plate 3a. A connected separator/substitution processor 6 separates the detected substrings from the remaining datastring, while inserting, in place of the deleted substrings, a replacement string in the form of an icon 2 where the detected substring has the characteristics of a human face 1, or, where the characteristics of a license plate are detected, inserting of a replacement string representing a "white box" 3b. A storage processor 7 controls the storage format and location into a database 8 (or into various databases, not shown). As depicted in figure 3, the original datastring with its replacement strings (in the form of the icons 2 and the white box 3b) is stored in a normal, not extra secured format in a store location 8a. The privacy sensitive substrings, representing the characterizing details 1a of human faces 1 and license plates 3a respectively, are encrypted or processed in another way, to prevent inauthorized access and use. A (preferred) example of a process fit for that goal is the subject of an earlier patent application of applicant. After being processed in a special way (encrypted, refomatted, etc.) the privacy sensitive substrings are stored in database locations 8b.

As indicated above, the substrings may be processed dependent on said substring characteristics, for instance the human face related substrings are replaced with a "smiley" icon 2, while the license plate substring is replaced by a "white box". Preferrably, the (processed) substrings and the remaining data string are stored at mutually different locations, viz. locations 8a and 8b respectively; moreover, the substrings and the remaining data string are stored in mutually different formats, viz. in a not-secured format and in a secured format respectively.

The replacement strings are processed together with the remaining data string.

The replacement string preferrably comprises a watermark string, comprising an identifier referring to the relevant store locations 8b of the relevant replaced and separately processed substrings.

The replacement string may comprise, as shown, a "standard" pattern, like an icon 2, a white box 3 or for instance a random bitstring. Like the "smiley" icons in fact does, the replacement string comprises elements derived from the relevant replacing substring, viz. the detailed human face 1 portion is substituted by a "standard human face-like" icon. In the same way, the license plate could be substituted, by processor 6, by a car-related icon.

Finally, each replacement string may comprise a time stamp referring to the originating time of the relevant substring or image, recorded by video camera 4.

## Claims

**1.** Method for processing of a data string generated by a data source, **CHARACTERIZED BY** the following steps:
a. the data string is inspected for the presence of one or more substrings complying with certain substring characteristics;
b. if found, said one or more substrings are processed separately from the remaining data string.

**2.** Method according to claim 1, **CHARACTERIZED IN that** said data string is an image data string, generated by an image data source.

**3.** Method according to claim 1, **CHARACTERIZED IN that** said one or more substrings and said remaining data string are processed in different ways.

**4.** Method according to claim 3, **CHARACTERIZED IN that** said one or more substrings are processed dependent on said substring characteristics.

**5.** Method according to claim 1, **CHARACTERIZED IN that** said one or more substrings and said remaining data string are stored at mutually different locations.

**6.** Method according to claim 1, **CHARACTERIZED IN that** said one or more substrings and said remaining data string are stored in mutually different formats.

**7.** Method according to claim 1, **CHARACTERIZED IN that** said one or more substrings are encrypted and stored in encrypted form.

**8.** Method according to claim 1, **CHARACTERIZED IN that** said one of more substrings each are replaced by a replacement string, which replacement string is processed further together with said remaining data string.

**9.** Method according to claim 8, **CHARACTERIZED IN that** said replacement string comprises a watermark string.

**10.** Method according to claims 5 and 9, **CHARACTERIZED IN that** said watermark string comprise an identifier referring to the relevant store location or locations of the relevant replaced and separately processed substring.

**11.** Method according to claim 8, **CHARACTERIZED IN that** said replacement string comprises a random bitstring.

**12.** Method according to claim 8, **CHARACTERIZED IN that** said replacement string comprises elements derived from the relevant replacing substring.

**13.** Method according to claim 8, **CHARACTERIZED IN that** said replacement string comprises a time stamp referring to the originating time of the relevant substring.

**14.** System for processing of a data string generated by a data source (4), **CHARACTERIZED BY** monitoring means (5) for monitoring the data string for the presence of one or more substrings complying with certain substring characteristics, while, if found, said one or more substrings are separated by separation means (5) and processed, by processing means (6,7) separately from the remaining data string.

**15.** System according to claim 14, **CHARACTERIZED IN that** said data source is an image data source (4).

**16.** System according to claim 14, **CHARACTERIZED IN that** said one or more substrings and said remaining data string are stored at mutually different locations (8a,8b) of storage means (8).

**17.** System according to claim 14, **CHARACTERIZED IN that** said one or more substrings and said remaining data string are formatted, by formatting means (7) in mutually different formats.

**18.** System according to claim 17, **CHARACTERIZED IN that** said one or more substrings are encrypted, by said formatting means (7) and stored, by said storage means (8) in encrypted form.

**19.** System according to claim 14, **CHARACTERIZED IN that** said one of more substrings each are replaced, by replacement means (6), by a replacement string.

**20.** System according to claim 19, **CHARACTERIZED IN that** said replacement means (6) generate a replacement string comprising a random bitstring.

**21.** System according to claim 19, **CHARACTERIZED IN that** said replacement means (6) generate a replacement string comprising elements derived from the characteristics of relevant replacing substring.

**22.** System according to claim 19, **CHARACTERIZED IN that** said replacement means (6) adds to each replacement string an identifier referring to the relevant store location or locations of the substring.

**23.** System according to claim 19, **CHARACTERIZED IN that** said replacement means (6) adds to each replacement string a time stamp referring to the originating time of the relevant data string or substring.

**23.** Data source generating a data string wherein the datasource comprises:
- inspection means to inspect the data string for the presence of one or more substrings complying with certain substring characteristics and
- division means for processing said one or more substrings, if found, separately from a remaining data string

**24.** Data source according to claim 23 wherein said source is a digital camera

**25.** Data source according to claim 23 wherein said source is an analog camera the output of which is digitalized by an analog-digital conversion module for obtaining said data string.

**26.** Data source according to any of the claims 23-25 wherein replacement means are provided to replace said one or more substrings by at least one replacement data string to be processed further with said remaining data string.

**27.** Data source according to any of the claims 23-26 wherein network communication means are provided for transmission of said one or more substring, said replacement data string and/or said remaining data string over a data communication network for storing said one or more substring separately from said replacement data string and/or said remaining data string at muatualy different locations.

**28.** Data source according to any of the claims 23-27 wherein at least one of said separate storage locations is located at or near the data source.

**29.** Data source according to any of the claims 23-28 wherein watermarking means are provided for inserting a watermark string according to claims 9-13.

**30.** Data communication network including:
- at least one data source generating a data string which data string is inspected for the presence of one or more substrings complying with certain substring characteristics and, if found, being processed separately from the remaining data string and transmitting means for transmitting said one or more substrings and/or remaining data string over the data communication network communcatively connected via said data communication network to
- at least one storage location to store at least one of said one or more substrings

**31.** Datacommunication network according to claim 30 wherein said one or more substrings have been replaced by replacement strings to be processed further with said remaining data string.

**32.** A computer program for running on a computer system at least including software code portions performing the inspection of a datastring generated by a data source for the presence of one or more substrings complying with certain substring characteristics which substrings, if found, are processed by the program separately from the remaining data string.

**33.** Computer program according to claim 32 performing the replacement of said one or more substrings by replacement strings to be processed further with said remaining data string.

**34.** Computer program according to claim 32 performing the insertion of a watermark string into said replacement string referring to the storage location of the relevant one or more substrings.

**35.** A data carrier, stored with data loadable in a computer memory said data representing a computer program for running on a computer system at least including software code portions for performing the inspection of a datastring generated by a data source for the presence of one or more substrings complying with certain substring characteristics which substrings, if found, are processed by the program separately from the remaining data string.
